# EUROPÄISCHE PATENTSCHRIFT

(11) **EP 1 406 021 B1**
(45) Veröffentlichungstag und Bekanntmachung des Hinweises auf die Patenterteilung: **25.01.2006**
(21) Anmeldenummer: 02020307.1
(22) Anmeldetag: 11.09.2002
(51) Int. Cl.: F16B 2/18, E04F 13/08

(54) **Befestigungsvorrichtung**
Fastening device
Dispositif à fixation

(43) Veröffentlichungstag der Anmeldung: 07.04.2004
(73) Patentinhaber: Houben, Dietmar, 42320 Wuppertal (DE)
(72) Erfinder: Houben, Dietmar, 42320 Wuppertal (DE)
(74) Vertreter: Selting, Günther

(56) Entgegenhaltungen:
- EP-A- 0 348 853
- FR-A- 1 179 076
- FR-A- 2 590 632
- US-A- 4 672 898
- US-A- 4 964 748

## Beschreibung

Die Erfindung bezieht sich auf eine Befestigungsvorrichtung zur Befestigung eines Bauteiles an einem Tragteil in einem einstellbaren Abstand.

Derartige Befestigungsvorrichtungen dienen insbesondere zur Befestigung von als Fassadenelemente ausgebildeten Bauteilen an einem gebäudeseitigen Tragteil. Der gewünschte Abstand zwischen dem Bauteil und dem gebäudeseitigen Tragteil liegt in der Regel in einem Bereich zwischen wenigen Zentimetern und bis zu 20 Zentimetern, je nachdem, wie groß die auszugleichenden Toleranzen sind, wie dick die dazwischenliegende Isolationsschicht ist etc. Um bei der Montage möglichst flexibel zu sein, werden Befestigungsvorrichtungen eingesetzt, bei denen der Abstand zwischen dem Bauteil und dem Tragteil während der Montage eingestellt werden kann. Aus EP 0 348 853, die den nächstkommenden Stand der Technik darstellt, ist eine Befestigungsvorrichtung bekannt, die einen gebäudeseitigen und einen bauteilseitigen Kragschenkel aufweist, die zueinander verschiebbar sind und von denen mindestens einer ein Langloch aufweist. Durch das Langloch ist ein Schraubelement gesteckt, mit dem der das Langloch aufweisende Kragschenkel an dem anderen Kragschenkel in der gewünschten Position befestigt wird. Bei dieser Konstruktion stehen sich die Forderung nach einem großen Verstellbereich und nach einem möglichst kleinen einstellbaren Mindestabstand konkurrierend gegenüber. Die bekannten Befestigungsvorrichtungen weisen bei einem einstellbaren Mindestabstand von wenigen Zentimetern einen Einstellbereich von maximal ca. 30 bis 40 Millimetern auf.

Aus DE 296 15 166 ist eine Befestigungsvorrichtung bekannt, die mehrteilig ausgebildet ist und von einem Schwenkhebel und einem Stützhebel gebildet wird, die vertikal verschiebbar an dem Bauteil bzw. dem Tragteil befestigt sind. Diese Befestigungsvorrichtung ist in der Herstellung aufwändig und in der Handhabung bei der Montage umständlich.

Aufgabe der Erfindung ist es daher, eine Befestigungsvorrichtung mit einem kleinen mindestabstand und großen Einstellbereich zu schaffen.

Diese Aufgabe wird gelöst durch eine Befestigungsvorrichtung mit den Merkmalen des Anspruchs 1.

Die erfindungsgemäße Befestigungsvorrichtung weist als Verbindungselement ein Schwenkelement mit einem bogenförmigen Befestigungsstreifen auf. An einem Ende des Befestigungsstreifens ist ein Drehlager vorgesehen, das an dem Tragteil befestigt ist. Ferner sind entlang des bogenförmigen Befestigungsstreifens mindestens zwei Befestigungselemente vorgesehen, mit denen der Befestigungsstreifen an dem Bauteil befestigt ist. Grundsätzlich kann das Drehlager auch an dem Bauteil und können die Befestigungselemente an dem Tragteil vorgesehen sein. Zum Einstellen des gewünschten Abstandes wird das Schwenkelement bei der Montage um das Drehlager herum in eine Drehposition bewegt, in der der gewünschte Abstand zwischen dem Tragteil und dem Bauteil eingestellt ist und wird in der eingestellten Schwenkelement-Drehposition in dem gewünschten Abstand an dem Bauteil befestigt.

Das Schwenkelement bzw. der Befestigungsstreifen kann eine beliebige bogenförmig gekrümmte Form aufweisen, beispielsweise eine elliptische oder kreisförmige Form, kann jedoch auch einen diskontinuierlichen Verlauf aufweisen und beispielsweise vieleckig ausgebildet sein. Der ein Drehlager bildende Drehpunkt an dem Befestigungsstreifen-Ende des Schwenkelementes ist stets in dem selben Bereich des Schwenkelementes angeordnet. Die Positionen der beiden Befestigungselemente, mit denen der Befestigungsstreifen an dem Bauteil befestigt ist, werden dagegen stets in Abhängigkeit von der Schwenkelementneigung gewählt. Die Positionen der Befestigungselemente an dem Befestigungsstreifen werden so gewählt, dass sie möglichst weit auseinanderliegen, um möglichst große Kräfte übertragen zu können. Die beiden Befestigungspunkte der Befestigungselemente liegen idealerweise ungefähr in einer Vertikalebene, d.h. in einer Ebene parallel zu der Grundebene des Bauteiles. Als Befestigungselemente können Elemente aller Art verwendet werden, beispielsweise Klemmkrallen, Nieten, Schrauben etc.

Durch die Ausbildung des Verbindungselementes als schwenkbares Element kann der einstellbare Mindestabstand auf wenige Zentimeter begrenzt werden, wobei gleichzeitig der Einstellbereich 5 bis 10 Zentimeter und mehr betragen kann. Der Einstellbereich wird im Wesentlichen bestimmt durch die Höhe und die Länge des Bogens des Schwenkelementes. Der Mindestabstand ist ungefähr auf die Höhe des Bogens des Befestigungsstreifens begrenzt, während der einstellbare Höchstabstand durch die Länge bestimmt wird. Dadurch, dass die Befestigungspunkte auf einer Kurvenbahn liegen, ist gewährleistet, dass die Befestigungspunkte weiter auseinanderliegen, als dies bei einem geradlinigen stabförmigen Verbindungselement der Fall wäre. Durch die Ausbildung des Verbindungselementes als Schwenkelement ist der Abstand zwischen dem Bauteil und dem Tragteil in einem großen Bereich bei guter mechanischer Stabilität der Verbindung einstellbar. Die Herstellung des einstückigen und ebenen Verbindungselementes ist einfach. Auch die Handhabung und Montage ist einfach und problemlos. Die Höhe des Bogens beträgt vorzugsweise mindestens ein Zehntel der (Sehnen-) Länge des bogenförmigen Befestigungsstreifens.

Gemäß einer bevorzugten Ausgestaltung wird das Schwenkelement durch einen Vollbogen gebildet. Der Vollbogen beschreibt einen Bogen von ungefähr 180° und kann kreisförmig sein, kann jedoch auch elliptisch oder in anderer Form bogenförmig verlaufen. Das Schwenkelement kann vollflächig ausgebildet sein, kann aber auch als streifenartiger Bogen ausgebildet sein.

Die beiden Enden des streifenförmigen Befestigungsstreifens können durch eine gerade Stützstrebe miteinander verbunden sein, durch die der Bogen in Bezug auf eingeleitete Zug- und Druckkräfte stabilisiert wird. Zur Stabilisierung des streifenförmigen Vollbogens können weitere Stützstreben vorgesehen sein. Hierdurch wird die Stabilität des Schwenkelementes stark verbessert, der Materialverbrauch und die Wärmeleitung jedoch gering gehalten.

Gemäß einer bevorzugten Ausgestaltung ist das Schwenkelement einstückig ausgebildet und aus Metall bestehend. Das Schwenkelement kann ein Strangpressteil sein, das in Scheiben geschnitten wurde, kann aus Blech gestanzt oder gegossen sein. Als Material kommt insbesondere Edelstahl in Frage, das neben seiner Korrosionsbeständigkeit auch den Vorteil relativ geringer Wärmeleitfähigkeit aufweist.

Gemäß einer bevorzugten Ausgestaltung ist das Schwenkelement in seiner Streifenebene geschlitzt und bildet zwei zueinander parallele Teilstreifen, die im Bereich des das Drehlager aufweisenden Endes der Teilstreifen einstückig miteinander verbunden sind. Ein bauteilseitiger Befestigungssteg ist in den Schlitz zwischen den beiden Teilstreifen eingesteckt, so dass beide Teilstreifen den bauteilseitigen Steg zwischen sich einklemmen. Hierdurch wird auch in Bezug auf Kräfte, die senkrecht auf die Schwenkelement-Grundebene wirken, eine hohe Stabilität erzielt. Das geschlitzte Schwenkelement kann daher auch in einer Horizontalebene liegend eingesetzt werden, während das ungeschlitzte Schwenkelement bevorzugt in einer Vertikalebene stehend verwendet wird.

Vorzugsweise weist das Schwenkelement im Bereich des drehlagerseitigen Befestigungsstreifen-Endes eine Bohrung auf, die zusammen mit einem an dem Tragteil befestigten Lägerbolzen das Drehlager bildet. Der Lagerbolzen kann als Niete, kann als in das Tragteil einzuschraubende selbstschneidende Schraube oder als mit einer Gewindemutter an einer Tragteilbohrung befestigten Gewindeschraube ausgebildet sein. Die Bohrung wird bereits bei der Schwenkelement-Herstellung gebohrt, so dass die Montage des Schwenkelementes an dem Tragteil einfach und schnell vornehmbar ist.

Gemäß einer bevorzugten Ausgestaltung weist das Schwenkelement im Bereich des Befestigungsstreifens mindestens zwei über den gesamten Befestigungsstreifen verteilte Befestigungsbohrungen auf, in die zwei an dem Bauteil befestigte Befestigungselemente eingesteckt sind. Die Befestigungsbohrungen sind bereits werksseitig vorgesehen, so dass diese bei der Montage nicht mehr in das Schwenkelement gebohrt werden müssen. Um jedoch das Schwenkelement in zwei verschiedenen Schwenkpositionen, d.h. in zwei verschiedenen Abständen einstellen zu können, müssen mindestens drei Bohrungen vorgesehen sein. Die drei Bohrungen bilden zwei Paare von Befestigungsbohrungen, wobei eine mittlere Befestigungsbohrung jedem der beiden Paare zugeordnet sein kann. Sinnvollerweise ist jedoch eine Vielzahl von Befestigungsbohrungen vorgesehen, so dass ein enges Raster gegeben ist und zur Befestigung des Schwenkelementes an dem Bauteil ein möglichst großer Abstand der beiden Befestigungsbohrungen zueinander gewählt werden kann. Die Bohrungen sind nebeneinander und entlang des Befestigungsstreifens vorgesehen.

Vorzugsweise ist das das Drehlager aufweisende Ende des Befestigungsstreifens als Gegenbogen ausgebildet, in dem mindestens zwei Drehlagerbohrungen vorgesehen sind. Der Gegenbogen kann sich beispielsweise über ungefähr die Hälfte der Schwenkelementlänge erstrecken. Die Lage der gewählten Befestigungsbohrung kann dadurch, je nach Schwenkelementposition, weiter in der Mitte des Schwenkelementes gewählt werden, so dass die beiden Befestigungspunkte symmetrischer zu dem Drehpunkt liegen. Hierdurch wird eine symmetrischere Krafteinleitung horizontaler Kräfte gewährleistet, die insbesondere durch Windbelastungen verursacht werden.

Vorzugsweise weisen die Bohrungen, also die Drehlagerbohrungen und die Befestigungsbohrungen jeweils einen Kragen auf, der aus der Schwenkelementoberfläche hervorragt. Durch den Kragen wird die Berührungsfläche zwischen dem Schwenkelement einerseits und dem Bauteil bzw. dem Tragteil andererseits auf eine kleine Fläche begrenzt, wobei in den übrigen Überlappungsbereichen ein Luftspalt gebildet ist. Hierdurch wird die Wärmeübertragung der Befestigungsvorrichtung erheblich reduziert, so dass die Wärmeisolierung des betreffenden Gebäudes insgesamt verbessert ist.

Im Folgenden werden unter Bezugnahme auf die Zeichnungen mehrere Ausführungsbeispiele der Erfindung näher erläutert.

Es zeigen:
- Fig. 1: eine erste Ausführungsform einer Befestigungsvorrichtung in einer ersten Montageposition,
- Fig. 2: die Befestigungsvorrichtung der Figur 1 in einer zweiten Montageposition,
- Fig. 3: ein Verbindungselement einer zweiten Ausführungsform einer Befestigungsvorrichtung,
- Fig. 4: eine dritte Ausführungsform einer Befestigungsvorrichtung in einer ersten Montageposition,
- Fig. 5: die Befestigungsvorrichtung der Figur 4 in einer zweiten Montageposition,
- Fig. 6: die Befestigungsvorrichtung der Figur 4 in einer dritten Montageposition,
- Fig. 7: eine vierte Ausführungsform einer Befestigungsvorrichtung mit einem Schwenkelement ohne vorgebohrte Befestigungsbohrungen,
- Fig. 8: eine fünfte Ausführungsform einer Befestigungsvorrichtung mit einem geschlitzten Schwenkelement in horizontaler Montage, und
- Fig. 9: eine sechste Ausführungsform einer Befestigungsvorrichtung mit einem Schwenkelement in materialsparender Bauweise.

In den Figuren sind mehrere Ausführungsbeispiele einer Befestigungsvorrichtung zur Befestigung eines Bauteiles 12 mit einem gebäudeseitigen Tragteil 14dargestellt. In den vorliegenden Ausführungsbeispielen wird das Bauteil 12 von einem Rahmenteil 16 gebildet, das großflächige Verblendungselemente zum Verblenden eines Gebäudes tragen kann. Während das Tragteil 14 und das Rahmenteil 16 bei fünf der sechs Ausführungsbeispiele im Wesentlichen gleich ausgebildet sind, ist das sie verbindende Verbindungselement 18,118,218,318,418,518 jeweils verschieden ausgebildet.

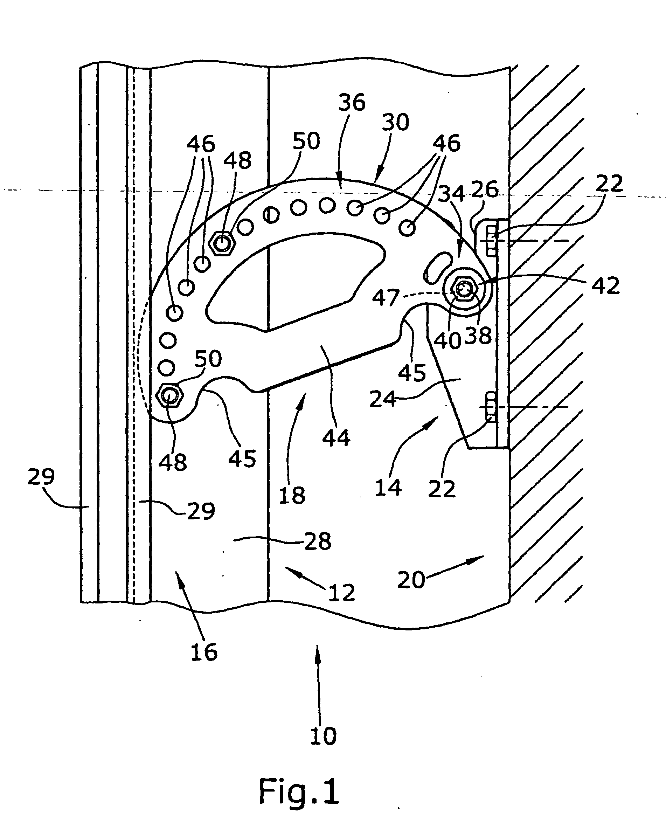

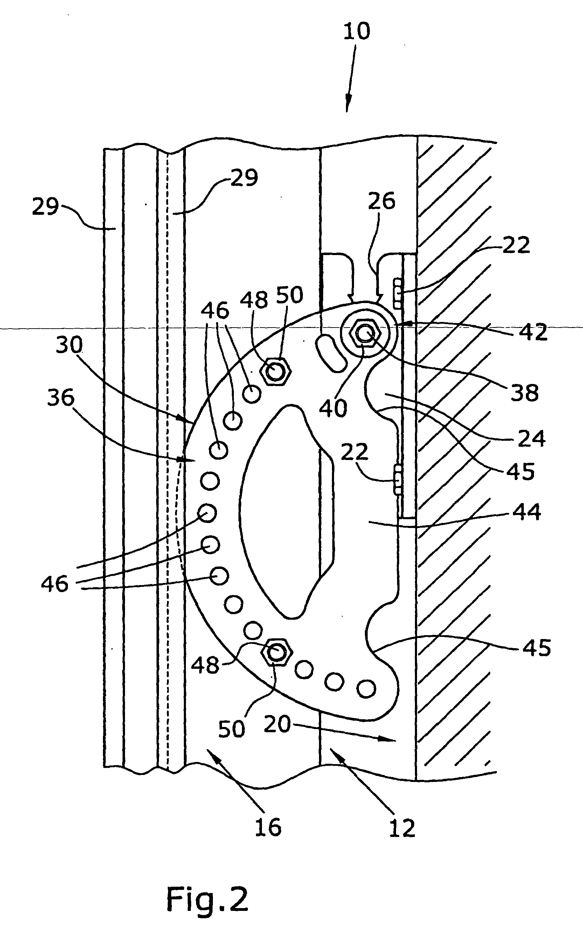

In dem in den Figuren 1 und 2 dargestellten ersten Ausführungsbeispiel einer Befestigungsvorrichtung 10 ist das Tragteil 14 mit mehreren Dübelschrauben 22 an einer Gebäudewand 20 fest angebracht. Das Tragteil 14 weist einen in einer Vertikalebene liegenden und senkrecht von der Gebäudewand 20 abragenden Kragschenkel 24 mit einer Befestigungsöffnung 26 auf. Die Befestigungsöffnung 26 ist ein nach oben offenes Langloch, kann jedoch auch als geschlossenes Rundloch ausgebildet sein.

Das Verbindungselement 18 ist als Schwenkelement 30 ausgebildet, das einstückig aus einer Edelstahlplatte hergestellt ist, in die die vorgesehenen Öffnungen gestanzt wurden. Das Rahmenteil 16 ist ein Tragprofil, das gebäudeseitig einen in einer Vertikalebene liegenden als Kragschenkel ausgebildeten Befestigungsschenkel 28 aufweist, an den senkrecht dazu mehrere vertikale Befestigungsstege 29 zur Befestigung von Fassadenelementen angeordnet sind.

Das Schwenkelement 30 weist einen Befestigungsstreifen 36 mit einem Befestigungsstreifen-Ende 34 auf. Der von dem Befestigungsstreifen 36 gebildete Vollbogen ist annähernd halbkreisförmig, d.h. umfasst einen Winkel von ungefähr 180°. An dem Befestigungsstreifen-Ende 34 weist das Schwenkelement 30 eine Bohrung 47 auf, durch die ein Lagerbolzen 38 hindurch gesteckt ist, der ferner durch die Tragteil-Befestigungsöffnung 26 hindurch gesteckt ist. Der Lagerbolzen 38 ist ein Gewindebolzen, der mit einer Gewindemutter 40 angezogen ist, so dass das Befestigungsstreifen-Ende 34 an dem Kragschenkel 24 des Tragteiles 14 befestigt ist. Die Bohrung 47 im Bereich des Befestigungsstreifen-Endes 34, der Lagerbolzen 38 und die Tragteil-Befestigungsöffnung 26 bilden zusammen ein Drehlager 42, um das sich das Schwenkelement 30 jedenfalls bis zur Beendigung der Montage drehen kann. Der Lagerbolzen kann auch in ein Innengewinde an dem Tragteil eingeschraubt sein. Der Lagerbolzen kann alternativ aber auch gewindefrei ausgebildet und mit einem Splint gesichert sein.

Die beiden Enden des bogenförmigen Befestigungsstreifens 36 sind durch eine Stützstrebe 44 miteinander verbunden, durch die das Schwenkelement 30 in Bezug auf horizontale Druck- und Zugkräfte stabilisiert ist. Die Stützstrebe 44 verläuft nicht durchgehend geradlinig, sondern weist an ihren beiden Enden kurze Bögen auf, mit denen sie in den Befestigungsstreifen 36 mündet. Diese Bögen werden durch zwei Ausnehmungen 45 gebildet, durch die der Querschnitt des Schwenkelementes 30 in diesem Bereich reduziert ist. Hierdurch wird der Wärmefluss von einem Ende zum anderen Ende des Schwenkelementes 30 erheblich verringert.

Das Schwenkelement 30 weist im Bereich des Befestigungsstreifens 36 vierzehn Befestigungsbohrungen 46 auf, die gleichmäßig entlang des Befestigungsstreifens 36 verteilt angeordnet sind.

Die Befestigungsbohrungen 46 dienen der Befestigung des Rahmenteiles 16 an dem Schwenkelement 30. Hierzu werden als Befestigungsschrauben ausgebildete Befestigungselemente 48 durch die betreffenden Befestigungsbohrungen 46 des Schwenkelementes 30 und des Bauteil-Befestigungsschenkels 28 hindurchgesteckt und mit entsprechenden Gewindemuttern 50 befestigt. Die betreffenden Bohrungen in dem Bauteil-Befestigungsschenkel 28 werden erst bei der Montage des Verbindungselementes 18 gebohrt. Die Befestigungsöffnungen in dem Bauteil-Befestigungsschenkel 28 können jedoch auch in Form von Bohrungen oder Langlöchern vorgefertigt sein, die für jeden Abstand zwischen dem Rahmenteil 16 und dem Tragteil 14 die Befestigung durch zwei Befestigungsschrauben erlaubt, ohne dass hierzu noch eine Bohrung bei der Montage gebohrt werden muss.

Der gewünschte Abstand zwischen dem Tragteil 14 und dem Rahmenteil 16 kann in Abhängigkeit von der Drehposition des Schwenkelementes 30 stufenlos auf den gewünschten Abstand eingestellt werden. In Figur 1 steht das Schwenkelement 30 ungefähr in einem Winkel von 20° zur Horizontalen, so dass in dieser Drehposition des Schwenkelementes 30 ein relativ großer Abstand zwischen dem Tragteil 14 und dem Rahmenteil 16 eingestellt ist. Der größte einstellbare Abstand zwischen dem Tragteil 14 und dem Rahmenteil 16 ergibt sich bei waagerechter Drehposition des Schwenkelementes 30. Der kleinste Minimalabstand zwischen dem Tragteil 14 und dem Rahmenteil 16 ist in der in Figur 2 dargestellten um 90° nach unten geschwenkten Drehposition des Schwenkelementes 30 dargestellt. In diesem Fall ist der Abstand zwischen dem Tragteil 14 und dem Rahmenteil 16 praktisch gleich Null, d.h. der Abstand des Tragteiles 14 von der Gebäudewand 20 beträgt maximal 1-2 cm.

Die beiden Befestigungspunkte für die Befestigungselemente 48 werden jeweils so gewählt, dass sie möglichst weit auseinanderliegen, wie in Figuren 1 und 2 dargestellt. Hierdurch werden die durch die eingeleiteten Gewichtskräfte, Windkräfte etc. verursachten Drehmomente relativ klein gehalten, so dass eine stabile Befestigung des Rahmenteils 16 an der Gebäudewand 20 gewährleistet ist.

In den folgenden Ausführungsbeispielen sind für die dem ersten Ausführungsbeispiel der Figuren 1 und 2 entsprechenden Teile jeweils um 100,200,300,400 bzw. 500 erhöhte Bezugszeichen verwendet.

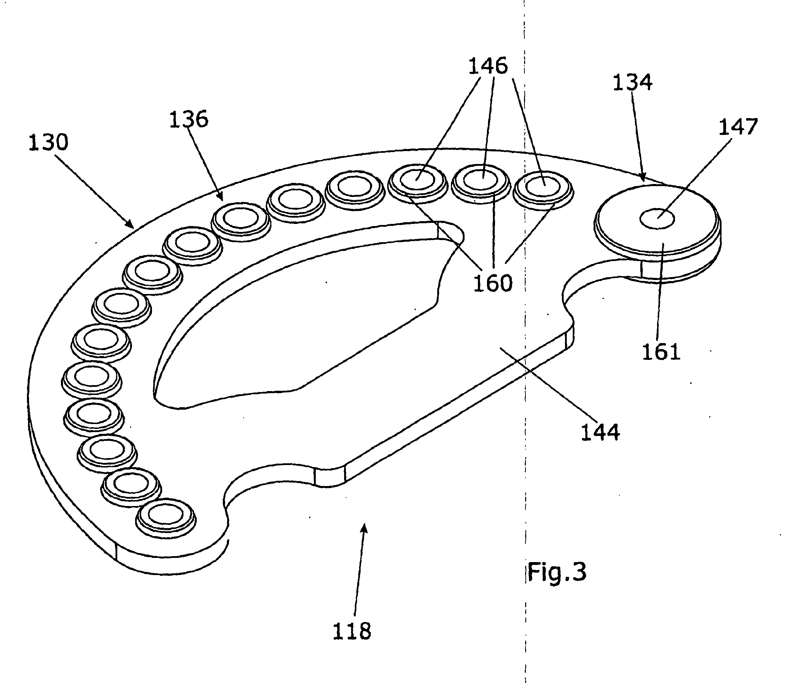

Die in der Figur 3 dargestellte Ausführungsform eines Verbindungselementes 118 weist gegenüber dem in den Figuren 1 und 2 dargestellten Verbindungselement 18 im Bereich aller Befestigungsbohrungen 146 und der Drehlagerbohrung 147 jeweils einen Kragen 160,161 auf, der aus der Oberfläche des Schwenkelementes 1 bis 2 Millimeter hervorragt. Die Kragen 160,161 sind an beiden Seiten des Schwenkelementes 130 vorgesehen. Durch die Kragen 160,161 wird die Berührungsfläche zwischen dem Schwenkelement 30 und dem Tragteil 14 bzw. dem Rahmenteil 16 auf die kleine Kragenfläche reduziert. Hierdurch wird der Wärmefluss zwischen den aus Metall bestehenden Teilen auf ein Minimum verringert.

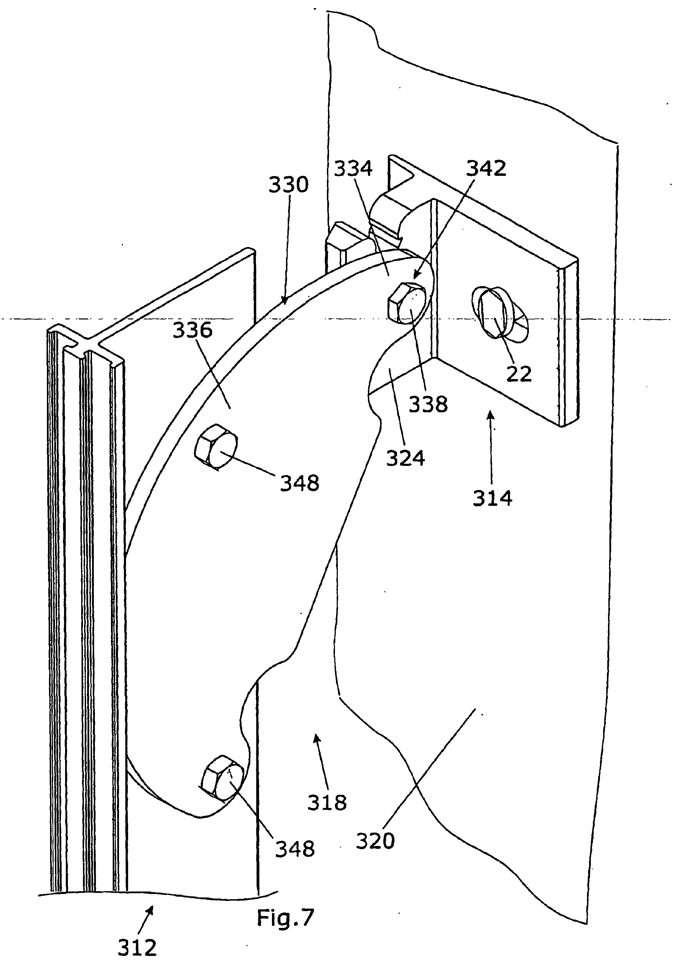

In einer weiteren in Figur 7 dargestellten Ausführungsform eines Verbindungselementes 318 ist das Schwenkelement als vollflächige halbkreisförmige Scheibe ausgebildet. Vor der Montage des Schwenkelementes 330 war nur eine einzige Bohrung vorgebohrt, nämlich eine Drehlagerbohrung. Die beiden Befestigungsbohrungen zum Einstecken der Befestigungselemente 348 wurden erst während der Montage an der gewünschten Stelle des Befestigungsstreifens 336 gebohrt.

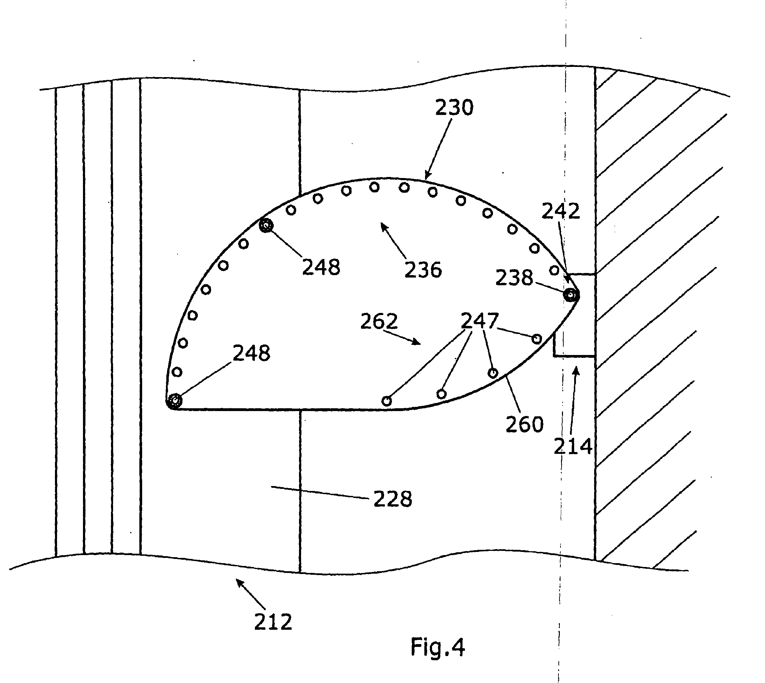

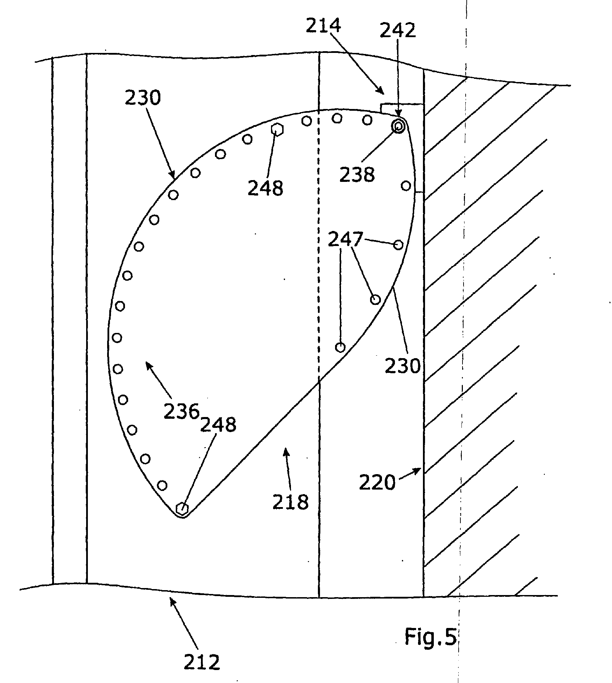

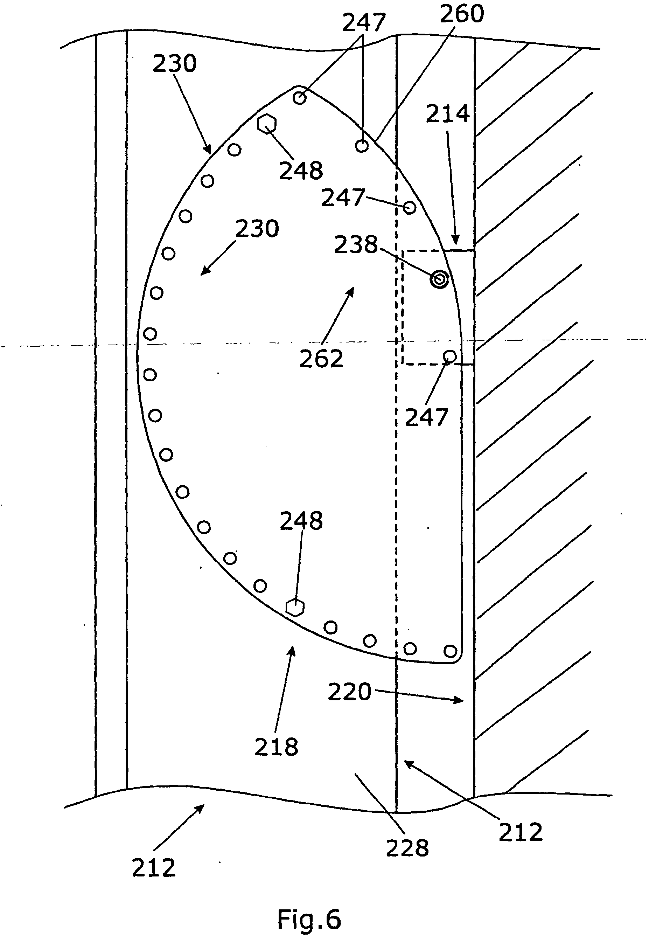

Bei dem in den Figuren 4 bis 6 dargestellten Ausführungbeispiel eines Verbindungselementes 218 ist das Schwenkelement 230 ebenfalls vollflächig ausgebildet und weist ein als Gegenbogen 260 ausgebildetes Befestigungsstreifen-Ende 262 auf. Im Bereich des Gegenbogens 260 sind statt nur einer insgesamt fünf Drehlager-Bohrungen 247 in einem konstanten Abstandsraster vorgesehen. Durch das Vorsehen mehrerer Drehlager-Bohrungen 247 im Bereich des Gegenbogens 260 ist die Möglichkeit gegeben, bei geringen Abständen, d.h. bei einer weit nach unten geneigten Drehposition des Schwenkelementes 230, das Schwenkelement 230 nach oben zu verschieben, so dass der Befestigungspunkt des Schwenkelementes 230 an dem Tragteil 214 höhenmäßig ungefähr zwischen den beiden Befestigungspunkten des Schwenkelementes 230 und dem Bauteil 212 liegt, wie in Figur 6 dargestellt.

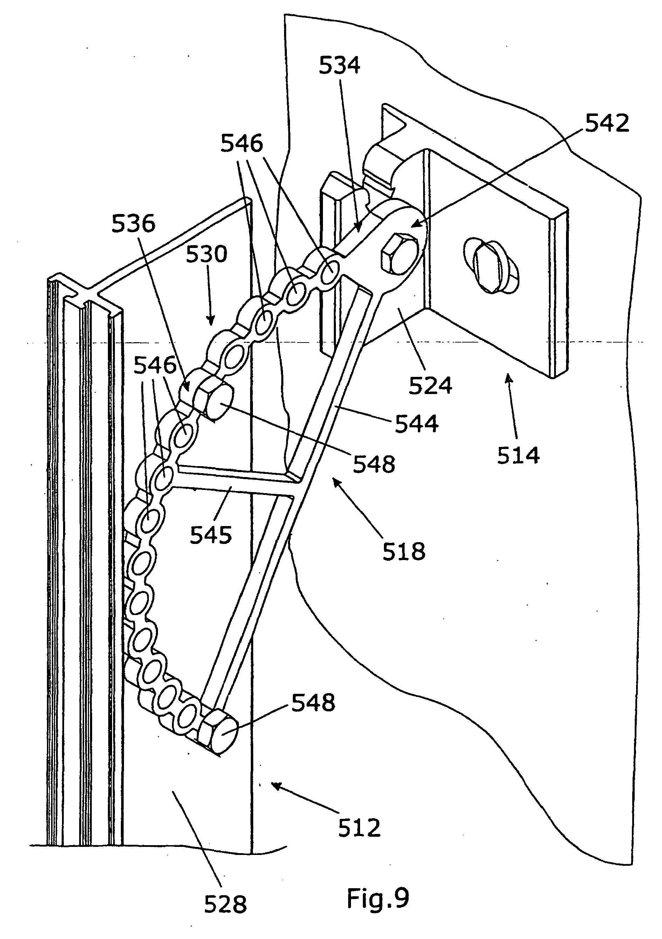

In Figur 9 ist ein weiteres Ausführungsbeispiel eines Verbindungselementes 518 dargestellt, bei der der Materialverbrauch zu seiner Herstellung minimiert ist. Das Schwenkelement 530 ist im Bereich des Befestigungsstreifens 536 auf ein die Befestigungsbohrungen 546 umgebendes und miteinander verbindendes Gerüst reduziert. In der Mitte der Stützstrebe 544 ist die Stabilität des Schwenkelementes 530 durch eine senkrecht darauf stehende Querstrebe 545 verstärkt.

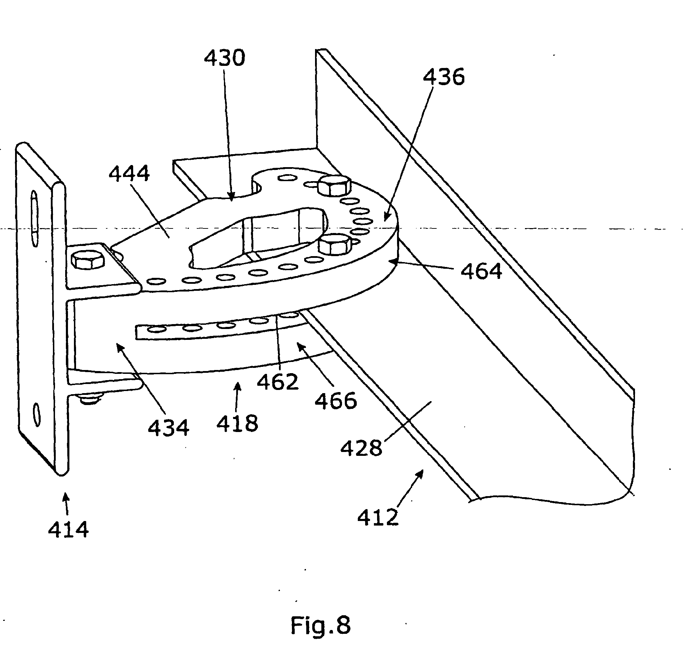

In dem in Figur 8 dargestellten Ausführungsbeispiel einer Befestigungsvorrichtung 418 ist das Schwenkelement 430 geschlitzt ausgebildet, d.h. im Bereich des Befestigungsstreifens 436 und der Stützstrebe 444 ist ein Schlitz 462 vorgesehen, durch den das Schwenkelement 430 in zwei Teilstreifen 464,466 geteilt ist, die im Bereich des Befestigungsstreifen-Endes 434 einstückig miteinander verbunden sind. Die Stärke des Befestigungsschenkels 428 des Bauteils 412 entspricht ungefähr der Schlitzbreite des Schlitzes 462, so dass der Befestigungsschenkel 428 in den Schlitz 462 passt und zwischen den beiden Teilstreifen 464,466 befestigt ist. Das geschlitzte Schwenkelement 430 kann auch in einer Horizontalebene liegend verwendet werden, wie in Figur 8 dargestellt.

Die beschriebenen und dargestellten Schwenkelemente weisen aufgrund ihrer Verstellbarkeit einen großen Einstellbereich auf, wobei gleichzeitig ein kleiner minimaler Abstand von beispielsweise 2 Zentimetern einstellbar ist. Das einstückige Schwenkelement 30 ist mit einfachen Mitteln herstellbar, beispielsweise als Spritzgussteil, als Schmiedeteil oder als Stanzteil. Die Befestigung des Schwenkelementes an dem Bauteil und dem Tragteil kann auf einfache Weise mit Nieten, mit selbstschneidenden Schrauben oder mit Gewindeschrauben vorgenommen werden.

## Patentansprüche

1. Befestigungsvorrichtung zur Befestigung eines Fassaden-Bauteiles (12) an einem Tragteil (14) in einem einstellbaren Abstand, mit
einem Verbindungselement (18) zum Verbinden des Fassaden-Bauteiles (12) mit dem Tragteil (14) in einem einstellbaren Abstand,
**dadurch gekennzeichnet,**
**dass** das Verbindungselement (18) als ein Schwenkelement (30) mit einem bogenförmigen Befestigungsstreifen (36) und einem Drehlager (42) an einem Ende (34) des Befestigungsstreifens (36) ausgebildet ist,
**dass** das Schwenkelement (30) mit dem Drehlager (42) an dem Tragteil (14) befestigt ist, und
**dass** entlang des bogenförmigen Befestigungsstreifens (36) mindestens zwei Befestigungselemente (48) vorgesehen sind, mit denen das Schwenkelement (30) an dem Fassaden-Bauteil (12) befestigt ist.

2. Befestigungsvorrichtung nach Anspruch 1, **dadurch gekennzeichnet, dass** die Länge des Bogens des Befestigungsstreifens (36) höchstens das Zehnfache der Höhe des Bogens des Befestigungsstreifens beträgt.

3. Befestigungsvorrichtung nach Anspruch 1 oder 2, **dadurch gekennzeichnet, dass** der Befestigungsstreifen (36) einen Vollbogen bildet.

4. Befestigungsvorrichtung nach Anspruch 3, **dadurch gekennzeichnet, dass** die beiden Enden des Befestigungsstreifens (36) durch eine Stützstrebe (44) miteinander verbunden sind.

5. Befestigungsvorrichtung nach einem der Ansprüche 1-4, **dadurch gekennzeichnet, dass** das Schwenkelement (30) einstückig ausgebildet ist und aus Metall besteht.

6. Befestigungsvorrichtung nach einem der Ansprüche 1-5, **dadurch gekennzeichnet, dass** das Schwenkelement (430) in der Streifenebene geschlitzt ist und zwei parallele Teilstreifen (464,466) bildet, die im Bereich des das Drehlager (42) aufweisenden Befestigungsstreifen-Endes (434) einstückig miteinander verbunden sind.

7. Befestigungsvorrichtung nach einem der Ansprüche 1-6, **dadurch gekennzeichnet, dass** das Schwenkelement (30) im Bereich des drehlagerseitigen Befestigungsstreifen-Endes (34) eine Bohrung (47) aufweist, die zusammen mit einem an dem Tragteil (14) befestigten Lagerbolzen (38) das Drehlager (42) bildet.

8. Befestigungsvorrichtung nach einem der Ansprüche 1-7, **dadurch gekennzeichnet, dass** das Schwenkelement (30) mindestens zwei entlang des gesamten Befestigungsstreifens (36) verteilte Befestigungsbohrungen (46) aufweist, in die die zwei an dem Bauteil (12) befestigte Befestigungselemente (48) eingesteckt sind.

9. Befestigungsvorrichtung nach einem der Ansprüche 1-8, **dadurch gekennzeichnet, dass** das drehgelenkseitige Befestigungsstreifen-Ende (262) als Gegenbogen (260) ausgebildet ist, in dem mindestens zwei Drehlagerbohrungen (247) vorgesehen sind.

10. Befestigungsvorrichtung nach einem der Ansprüche 7-9, **dadurch gekennzeichnet, dass** die Bohrungen (146,147) einen Kragen (160,161) aufweisen, der aus der Schwenkelementoberfläche hervorragt.

## Claims

1. A fastening device for fastening a facade component (12) to a support member (14) at an adjustable distance, comprising
a connection element (18) for connecting the facade component (12) to the support member (14) at an adjustable distance,
**characterized in**
**that** the connection element (18) is configured as a pivoting element (30) comprising an arcuate fastening strip (36) and a pivot bearing (42) arranged on one end (34) of the fastening strip (36),
**that** the pivoting element (30) is fastened to the support member (14) by the pivot bearing (42) and
**that** at least two fastening elements (48) are provided along the arcuate fastening strip (36) for fastening the pivoting element (30) to the facade component (12).

2. The fastening device according to claim 1, **characterized in that** the length of the arc of the fastening strip (36) is at most ten times the height of the arc of the fastening strip.

3. The fastening device according to claim 1 or 2, **characterized in that** the fastening strip (36) forms a full arc.

4. The fastening device according to claim 3, **characterized in that** the two ends of the fastening strip (36) are connected to each other by a support web (44).

5. The fastening device according to any one of claims 1-4, **characterized in that** the pivoting element (30) is formed as one piece and comprises metal.

6. The fastening device according to any one of claims 1-5, **characterized in that** the pivoting element (430) is slitted in the strip plane and forms two parallel partial strips (464,466) which in the region of the fastening-strip end (434) comprising the pivot bearing (42) are connected to each other as one piece.

7. The fastening device according to any one of claims 1-6, **characterized in that**, in the region of the fastening-strip end (34) on the pivot-bearing side, the pivoting element (30) is formed with a bore (47) which together with a pivot pin (38) fastened to the support member (14) forms the pivot bearing (42).

8. The fastening device according to any one of claims 1-7, **characterized in that** the pivoting element (30) is formed with at least two fastening bores (46) distributed along the whole fastening strip (36) and having inserted therein the two fastening elements (48) fastened to the component (12).

9. The fastening device according to any one of claims 1-8, **characterized in that** the fastening-strip end (262) on the pivot-bearing side is formed as a counter-arc (260) having at least two pivot-bearing bores (247) provided therein.

10. The fastening device according to any one of claims 7-9, **characterized in that** the bores (146,147) are provided with a collar (160,161) projecting from the pivot element surface.

## Revendications

1. Dispositif de fixation pour la fixation d'un élément structurel de façade (12) à une pièce de support (14) à une distance réglable, avec
- un élément d'assemblage (18) pour assembler l'élément structurel de façade (12) avec la pièce de support (14) à une distance réglable,
**caractérisé en ce que**
- l'élément d'assemblage (18) est constitué par un élément pivotant (30) avec une bande de fixation en forme d'arc (36) et un palier rotatif (42) à une extrémité (34) de la bande de fixation (36),
- l'élément pivotant (30) est fixé à la pièce de support (14) par le palier rotatif (42), et
- au moins deux éléments de fixation (48) sont prévus le long de la bande de fixation en forme d'arc (36), par lesquels l'élément pivotant (30) est fixé à l'élément structurel de façade (12).

2. Dispositif de fixation selon la revendication 1, **caractérisé en ce que** la longueur de l'arc de la bande de fixation (36) vaut au maximum le décuple de la hauteur de l'arc de la bande de fixation.

3. Dispositif de fixation selon la revendication 1 ou 2, **caractérisé en ce que** la bande de fixation (36) forme un arc plein.

4. Dispositif de fixation selon la revendication 3, **caractérisé en ce que** les deux extrémités de la bande de fixation (36) sont reliées l'une à l'autre par une barre de soutien (44).

5. Dispositif de fixation selon l'une quelconque des revendications 1 à 4, **caractérisé en ce que** l'élément pivotant (30) est formé d'un seul tenant et est constitué de métal.

6. Dispositif de fixation selon l'une quelconque des revendications 1 à 5, **caractérisé en ce que** l'élément pivotant (430) est fendu dans le plan de la bande et forme deux bandes partielles parallèles (464, 466), qui sont réunies l'une avec l'autre en une seule pièce dans la région de l'extrémité de la bande de fixation (434) présentant le palier rotatif (42).

7. Dispositif de fixation selon l'une quelconque des revendications 1 à 5, **caractérisé en ce que** l'élément pivotant (30) présente dans la région de l'extrémité de la bande de fixation (34) du côté du palier rotatif, un alésage (47) qui forme avec un tourillon (38) fixé à la pièce de support (14) le palier rotatif (42).

8. Dispositif de fixation selon l'une quelconque des revendications 1 à 7, **caractérisé en ce que** l'élément pivotant (30) présente au moins deux alésages de fixation (46) répartis le long de l'ensemble de la bande de fixation (36), dans lesquels les deux éléments de fixation (48) fixés à l'élément structurel (12) sont engagés.

9. Dispositif de fixation selon l'une quelconque des revendications 1 à 8, **caractérisé en ce que** l'extrémité de la bande de fixation (262) du côté de l'articulation rotative est formée par un arc inversé (260), dans lequel au moins deux alésages de palier rotatif (247) sont prévus.

10. Dispositif de fixation selon l'une quelconque des revendications 7 à 9, **caractérisé en ce que** les alésages (146, 147) présentent un collet (160, 161), qui fait saillie sur la surface de l'élément pivotant.
